# EUROPEAN PATENT SPECIFICATION

(11) **EP 0 496 610 B1**
(45) Date of publication and mention of the grant of the patent: **14.05.1997**
(21) Application number: 92300566.4
(22) Date of filing: 23.01.1992
(51) Int. Cl.: G06K 7/08, G06K 7/10

(54) **Interrogating station for identification purposes, with separate transmitting and receiving antennae**
Abfragestation zur Identifizierung mit separaten Sende- und Empfangsantennen
Poste d'interrogation pour l'identification à antennes de transmission et de réception séparées

(30) Priority: 23.01.1991 NL 9100110
(43) Date of publication of application: 29.07.1992
(73) Proprietor: Texas Instruments Holland B.V., 7600 AA Almelo (NL)
(72) Inventor: D'Hont, Loek, NL-8032 BE Zwolle (NL)
(74) Representative: Schwepfinger, Karl-Heinz, Dipl.-Ing.

(56) References cited:
- EP-A- 0 325 837
- WO-A-84/00869
- WO-A-86/02186
- US-A- 3 689 885
- US-A- 3 868 669
- US-A- 4 539 710
- PATENT ABSTRACTS OF JAPAN, vol. 11, no. 147 (P-575)[2594], 14th May 1987; & JP-A-61 283 979

## Description

The invention relates to an interrogating station for interrogation and identification of an object as defined in the precharacterizing part of claim 1.

An interrogating station of this type is known from WO 84/00869 in which a system for passively identifying remote objects such as livestock is described. Said system comprises a power transmitter which transmits a plurality of radio frequency burst signals at a given frequency, and a receiver which reads coded identification signals produced by a transponder associated with the object to be identified. The transmitter and receiver are time division multiplexed for alternate operation.

Through such an interrogating station, the transponders fitted on the objects are illuminated or charged by means of high-frequency interrogation signals. Such a transponder can be a passive transponder in which on the basis of the charge produced by the electromagnetic field a transmission of its own identification code then takes place. The antenna used in the interrogating station in the state of the art often has simultaneously both the function of transmitting or interrogating antenna and the function of receiving antenna for receiving the identification code. The antenna can be in the form of a frame antenna which is fitted round the conveyor. and which is generally satisfactory as regards charging of the transponders, apart from a number of small dead zones for certain transponder antenna orientations. However, the accuracy and completeness of reading or receiving decreases if several transponders are placed in different configurations in close succession on the interrogation path. This is the case particularly in a noisy environment for which a shielding would then be necessary in receiving conditions.

An attempt can be made to reduce the dimensions of the frame antenna. as a result of which a more intense electromagnetic field is obtained. but the dimensions of the frame antenna are generally fixed by the dimensions of the conveyor belt or tunnel and the pieces of luggage being moved on or in it. For that reason such a frame antenna generally has to have dimensions of 38 × 39 inches.

Another possibility is to use more than one receiving antenna.

EP-A-0 325 837 in which a rapid validity checking apparatus is dislcosed suggests to use multiple antennae for signal reception which are multiplexed at the reader. Predetermined signals from transponders placed on moveable objects, such as ship containers, automobiles and railroad cars, are read and compared with the expected detection pulse stream to separate valid pulse streams from invalid ones and to control the multiplexing of the reader from one antenna to another.

In US-A-4 539 710 a diversity telemetry receiver is described having plural spaced antennae, a plurality of RF FM receiving channels each associated with an antenna, an FM detector and a signal level responsive switch operative to selectively apply the IF signal from the channel having the strongest signal level to the FM detector.

From US-A-3 689 885 an interrogator-responder system is known wherein the interrogator unit comprises a plurality of interrogator coils alternately operable in a field generating condition and in a coded information field receiving condition and oriented in a preselected geometric array for detecting the electromagnetic coded information field, independent of the orientation of the responder for two-dimensional or three-dimensional capabilities.

A disadvantage of the use of separate receiving antennae was that a single antenna is never capable by itself of covering the whole interrogation path and that the connection of several receiving antennae and the processing of several receiving signals is fairly cumbersome.

The object of the invention is to solve this problem. This is achieved by the feature of the characterizing part of claim 1. It has surprisingly been found that according to the invention the good and strong features of the separate transmitting antenna and those of the separate receiving antenna can be maintained while avoiding the negative features. This is achieved in a relatively simple and cheap design.

The smaller receiving antennae according to the invention are generally placed equally distributed around and near the sides of the conveyor tunnel. In this design an excellent separation capacity is obtained, through which objects with the appropriate transponders following one another in close succession can be interrogated and read with great accuracy. With the number of antennae being, e.g. eight receiving antennae round the interrogation path. a reading efficiency of 99% can be obtained with a distance of nine inches between the transponders if the conveyor is moving at a maximum speed of 2 m/sec. The transponders can in this case assume any desired spatial angle or orientation.

A further advantage is that increased receiver sensitivity is achieved. since no trade-offs are needed for a combined antenna design. The separate transmitting and receiving functions, i.e. with periods succeeding each other. also increase the acceptable speed of movement of the objects.

The invention will be explained in greater detail with reference to an example of an embodiment shown in the drawings. in which:
Fig. 1 shows a perspective view of an embodiment of the antenna system used in the interrogating station according to the invention;
Fig. 2 shows a block diagram of an embodiment of the transmit and receive unit of the interrogating station according to the invention;
Fig. 3 gives an example of a rod antenna used; and
Fig. 4 gives a variant of the embodiment of the receive unit according to the invention shown in Fig. 2.

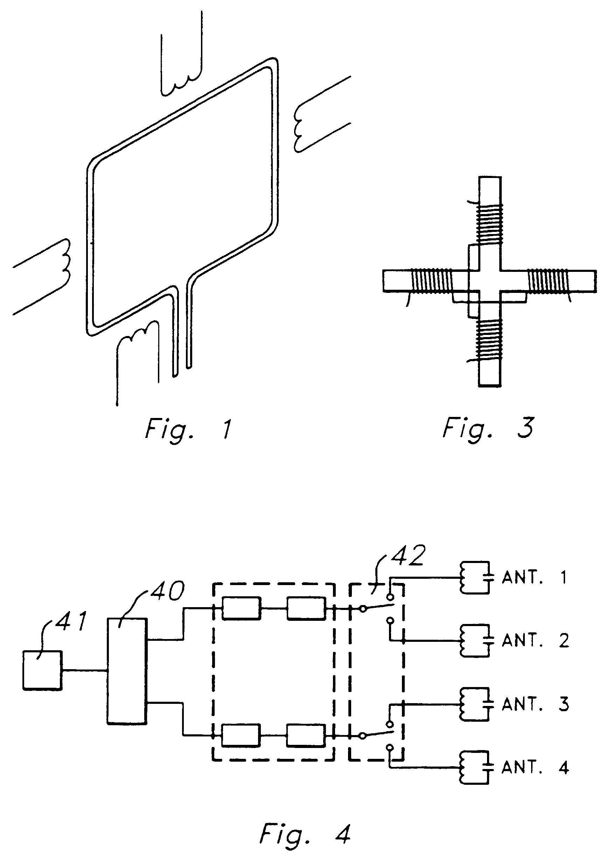

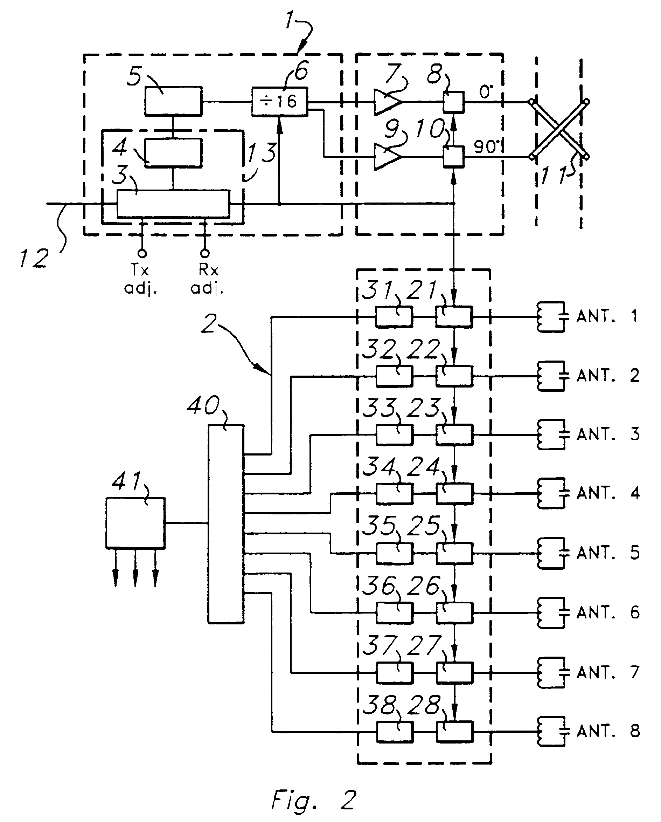

The antenna system shown in Fig. 1 comprises a frame-shaped interrogating antenna and several - in this example four - separate receiving antennae which are disposed around the imaginary conveyor tunnel. An embodiment with e.g. eight receiving antennae, two on each side of the frame antenna, or an embodiment with two receiving antennae. each on an opposite side of the frame antenna, is also possible.

With such a large frame antenna with dimensions of 38 x 39 inches it is still possible to achieve a reading of two successive transponders with a distance of nine inches between them if these transponders are being moved along in the centre of the conveyor. If the transponders are closer to the antenna side, an even better resolution or separation is obtained. This goes without saying if it is remembered that if more field lines pass through the transponder the reading performance will also be better.

The block diagram of an embodiment according to the invention shown in Fig. 2 indicates by 1 the transmit circuit and by 2 in general the receive circuit. In the transmit circuit 1 a transmit-receive control circuit is indicated by 13 which has a pulse generator 3 controlled by an enable/disable signal 12 and a divider 4. Reference number 5 indicates an oscillator with a frequency of 2147.2 kHz, reference number 6 is a 1 : 16 divider, and 7 and 9 are a power amplifier in each output of the divider 6, while 8 and 10 indicate a phase shifter of 0° and 90° respectively. The phase shifters 8, 10 control the two frame antenna belonging to a rotary field antenna 11. It is also possible for a single power amplifier to be used to control a single frame antenna 11. By means of the adjusting elements Tx adj and Rx adj, the pulse generator 3 can be set in such a way that in a cycle of e.g. 45 to 120 msec the transmission circuit is first enabled for 30 to 100 msec to supply the antenna control signal or charging of the transponder, and then the receiving circuit is enabled for 15 to 20 msec to receive or read the identification code.

In the receive circuit 2 the eight receiving antenna are indicated by antl to ant8, and the transmit-receive ports inserted between the antenna ant1 to ant8 and the amplifiers 31 to 38 are indicated by 21 to 28. The output signals of the receive amplifiers 31 to 38 are fed to a digital multiplexer 40. From this multiplexer an output signal is sent to a processing circuit 41 which supplies a signal for further printing, display or storage.

The separate receiving antenna ant1 to ant8 can be in the form of a single rod antenna. Two receiving antennae in each case, e.g. ant1 and ant2, can also be combined to a cross rod antenna, as shown in Fig. 3, which has a greater sensitivity to more orientations.

Fig. 4 shows a variant of the receive unit in which an analogue multiplexer 42 is used for the passing alternately of the signals from the - in this case four - receiving antenna ant1 to ant4. The advantage of this variant is a saving in receiving ports and amplifiers.

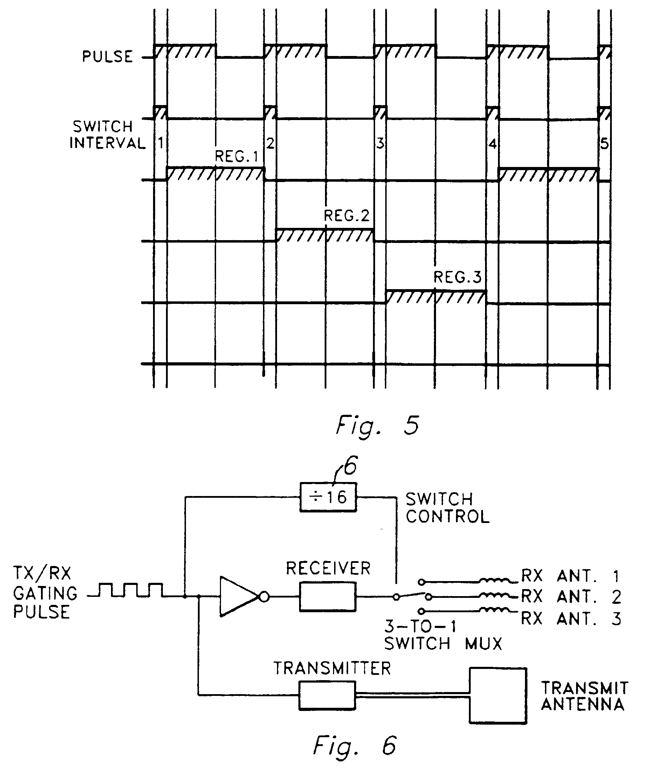

Figure 5 and 6 show a multiplexed interrogation system wherein three antennae (REC1, REC2 and REC3) respond to a single Tx Pulse in sequence.

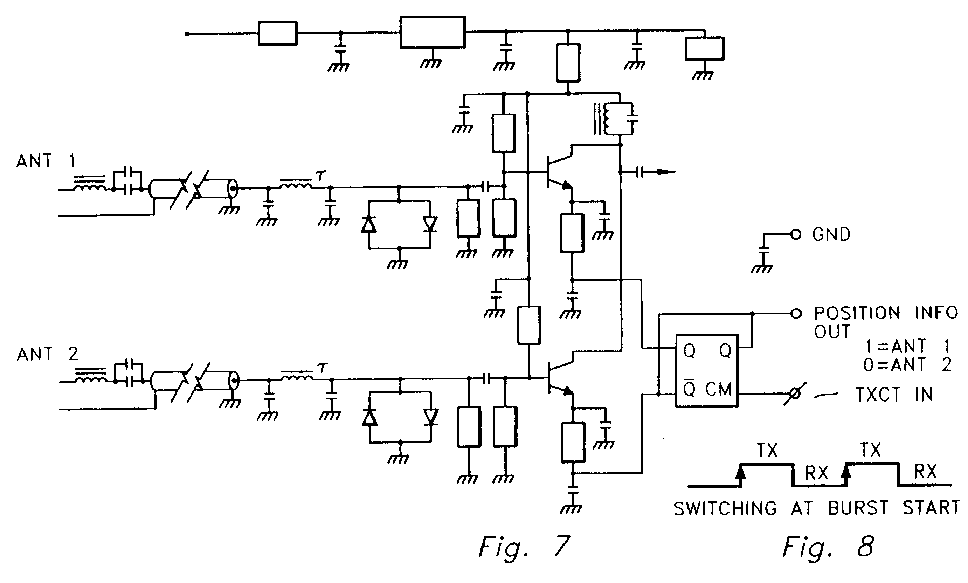

Figure 8 shows the timing of an alternate transmit (Tx)/receive (Rx) regime.

From figure 5, it will be observed that transmission and reception are not contemporaneous, but the transmit pulse and reception period do overlap in time. It will further be appreciate that in an alternative embodiment of the present invention (Figure 2) a plurality of receiving antennae may be simultaneously operative.

## Claims

1. Interrogating station using high-frequency signals for interrogation and identification of an object, which object is moved along an interrogation path, said station being provided with an antenna system for transmitting high-frequency interrogation signals and for receiving an identification code transmitted by a transponder fixed to the object, and a transmit-receive unit for supplying an antenna control signal and for receiving the identification code, respectively, wherein the antenna system comprises at least one separate interrogating antenna (11) and one or more separate receiving antennae (ant. 1,...), and wherein the transmit-receive unit contains a transmit circuit (1) and a receive circuit (2), both circuits being separated by a transmit-receive switch; characterized in that the transmitting antenna (11) is in the form of a frame antenna which is disposed round the interrogation path, and of which the side of the frame antenna disposed under the interrogation path is fed in the centre by the antenna control signal, and in that the antenna system comprises at least four receiving antennae (ant. 1,...) which are disposed equally round the interrogation path in a plane running essentially at right angles to the lengthwise direction of the interrogation path.

2. Interrogating station according to claim 1, wherein the interrogating station is implemented for a continuous cyclic succession of transponder interrogation and identification code receiving, while during an interrogation period the interrogating antenna (11) is controlled by the transmit circuit (1), and then for a subsequent receiving period the separate receiving antennae (ant. 1,...) are connected to the receive circuit belonging to each receiving antenna.

3. Interrogating station according to claim 1, wherein transmission and reception do not occur contemporaneously.

4. Interrogating station according to claim 1, wherein the antenna system comprises a plurality of receiving antennae (ant. 1...), and wherein during a reception period at least one of said receiving antennae (ant. 1,...) is inoperative.

5. An interrogating station as claimed in claim 4, and wherein during reception a selected one of said receiving antennae (ant. 1,...) is operative.

6. An interrogating station as claimed in claim 5, and wherein during a subsequent reception period a different selected one of said plurality of said receiving antennae (ant. 1,...) is operative.

7. An interrogating station as claimed in any of claims 3 to 6, and wherein during reception a plurality of receiving antennae are simultaneously operative.

## Patentansprüche

1. Abfragestation zur Abfrage und Identifizierung eines Objektes, das entlang eines Abfrageweges bewegt wird, unter Verwendung von Hochfrequenzsignalen, wobei die Station mit einem Antennensystem zum Aussenden hochfrequenter Abfragesignale und zum Empfangen eines Identifizierungscodes, der von einem an dem Objekt befestigten Transponder ausgesendet wird, und einer Sende-Empfangs-Einheit zum Einspeisen eines Antennensteuersignals und zum Empfangen des Identifizierungscodes ausgerüstet ist, und wobei das Antennensystem wenigstens eine separate Abfrageantenne (11) und eine oder mehrere separate Empfangsantennen (ant. 1, ...) aufweist und die Sende-Empfangs-Einheit eine Sendeschaltung (1) und eine Empfangsschaltung (2) enthält, die mittels eines Sende-Empfangs-Schalters getrennt werden, dadurch gekennzeichnet, daß die sendende Antenne (11) die Gestalt einer Rahmenantenne hat, die um den Abfrageweg herum angeordnet ist, wobei das Antennensteuersignal in die unterhalb des Abfrageweges angeordnete Seite der Rahmenantenne in der Mitte eingespeist wird, und daß das Antennensystem wenigstens vier Empfangsantennen (ant. 1, ...) aufweist, die in einer im wesentlichen rechtwinklig zur Längsrichtung des Abfrageweges verlaufenden Ebene gleichmäßig um den Abfrageweg herum angeordnet sind.

2. Abfragestation nach Anspruch 1, wobei die Abfragestation für eine ununterbrochene zyklische Aufeinanderfolge von Transponderabfrage und Identifizierungscodeempfang ausgestattet ist und während einer Abfrageperiode die Abfrageantenne (11) mittels der Sendeschaltung (1) gesteuert wird und dann während einer darauffolgenden Empfangsperiode die separaten Empfangsantennen (ant. 1, ...) an die Empfangsschaltung angeschlossen sind, der zu jeder Empfangsantenne gehört.

3. Abfragestation nach Anspruch 1, wobei Senden und Empfang nicht gleichzeitig vorkommen.

4. Abfragestation nach Anspruch 1, wobei das Antennensystem eine Mehrzahl von Empfangsantennen (ant. 1, ...) aufweist und während einer Empfangsperiode wenigstens eine der Empfangsantennen (ant. 1, ...) nicht in Betrieb ist.

5. Abfragestation nach Anspruch 4, wobei während eines Empfangs eine aus den Empfangsantennen (ant. 1, ...) ausgewählte Empfangsantenne in Betrieb ist.

6. Abfragestation nach Anspruch 5, wobei während einer darauffolgenden Empfangsperiode eine andere aus der Mehrzahl der Empfangsantennen (ant. 1, ...) ausgewählte Empfangsantenne in Betrieb ist.

7. Abfragestation nach einem der Ansprüche 3 bis 6, wobei während eines Empfangs eine Mehrzahl von Empfangsantennen gleichzeitig in Betrieb ist.

## Revendications

1. Station d'interrogation utilisant des signaux à haute fréquence pour l'interrogation et l'identification d'un objet, lequel objet est déplacé le long d'un trajet d'interrogation, ladite station étant munie d'un système d'antenne pour transmettre des signaux d'interrogation à haute fréquence et pour recevoir un code d'identification transmis par un transpondeur fixé à l'objet, et une unité de réception-transmission pour respectivement fournir un signal de commande d'antenne et recevoir le code d'identification, dans laquelle le système d'antenne comprend au moins une antenne d'interrogation séparée (11) et une ou plusieurs antennes de réception séparées (ant.1, ...), et dans laquelle l'unité de réception-transmission contient un circuit de transmission (1) et un circuit de réception (2), ces deux circuits étant séparés par un commutateur réception-transmission, caractérisée en ce que l'antenne de transmission (11) est de la forme d'un cadre qui est disposé autour du trajet d'interrogation, et dont le côté du cadre disposé sous le trajet d'interrogation est alimenté dans le centre par le signal de commande d'antenne. et en ce que le système d'antenne comprend au moins quatre antennes de réception (ant.1 ,...) qui sont disposées régulièrement autour du trajet d'interrogation dans un plan s'étendant substantiellement à angles droits par rapport à la direction longitudinale du trajet d'interrogation.

2. Station d'interrogation selon la revendication 1, dans laquelle la station d'interrogation est réalisée pour une succession cyclique continue de codes d'identification et d'interrogation de transpondeur, pendant que durant une période d'interrogation l'antenne d'interrogation (11) est commandée par le circuit de transmission (1), et puis pendant une période de réception suivante les antennes de réception séparées (ant.1,...) sont connectées au circuit de réception appartenant à chaque antenne de réception.

3. Station d'interrogation selon la revendication 1. dans laquelle la transmission et la réception ne se produisent pas simultanément.

4. Station d'interrogation selon la revendication 1, dans laquelle le système d'antenne comprend plusieurs antennes de réception (ant.1,...), et dans laquelle pendant une période de réception au moins une desdites antennes de réception (ant.1,...) est au repos.

5. Station d'interrogation selon la revendication 4, dans laquelle durant la réception une antenne sélectionnée parmi lesdites antennes de réception (ant.1,...) est en service.

6. Station d'interrogation selon la revendication 5, dans laquelle pendant une période de réception suivante. une antenne sélectionnée différente parmi lesdites plusieurs antennes de réception (ant.1, ...) est en service.

7. Station d'interrogation selon l'une quelconque des revendications 3 à 6, et dans laquelle pendant la réception plusieurs des antennes de réception sont simultanément en service.
